# FASCICULE DE BREVET EUROPEEN

(11) **EP 2 652 624 B1**
(45) Date de publication et mention de la délivrance du brevet: **18.03.2020**
(21) Numéro de dépôt: 11802488.4
(22) Date de dépôt: 21.11.2011
(51) Int. Cl.: G06F 12/08

(54) **PROCEDE, PROGRAMME D'ORDINATEUR ET DISPOSITIF DE GESTION D'ACCES MEMOIRE DANS UNE ARCHITECTURE MULTIPROCESSEURS DE TYPE NUMA**
VERFAHREN, COMPUTERPROGRAMM UND VORRICHTUNG ZUR VERWALTUNG DES SPEICHERZUGRIFFS BEI EINER NUMA-MULTIPROZESSORARCHITEKTUR
METHOD, COMPUTER PROGRAM, AND DEVICE FOR MANAGING MEMORY ACCESS IN A NUMA MULTIPROCESSOR ARCHITECTURE

(30) Priorité: 13.12.2010 FR 1060423
(43) Date de publication de la demande: 23.10.2013
(73) Titulaire: Bull SAS, 78340 Les Clayes-sous-Bois (FR); Commissariat à l'Énergie Atomique et aux Énergies Alternatives, 75015 Paris (FR)
(72) Inventeur: MENYHART, Zoltan, F-38100 Grenoble (FR); PERACHE, Marc, F-91410 Roinville-sous-Dourdan (FR)
(74) Mandataire: Santarelli
(86) Numéro de dépôt international: PCT/FR2011/052713
(87) Numéro de publication internationale: WO 2012/080605

(56) Documents cités:
- US-A- 5 727 150
- US-A1- 2004 064 601
- US-A1- 2010 281 220
- US-B1- 6 298 419
- US-B1- 6 347 362
- US-B1- 7 702 743

## Description

La présente invention concerne la gestion de la mémoire dans un système informatique et plus particulièrement un procédé, un programme d'ordinateur et un dispositif de gestion d'accès mémoire dans une architecture multiprocesseurs de type NUMA.

En raison des contraintes physiques liées aux microprocesseurs et limitant leurs performances, des architectures basées sur la mise en œuvre de plusieurs microprocesseurs, permettant d'effectuer des calculs parallèles, ont été développées. Ces architectures multiprocesseurs décrites dans US7702743 B1 autorisent l'exécution d'un grand nombre d'applications et/ou d'applications, découpées en étapes, faisant appel à une quantité importante de calcul.

Cependant, la mise en œuvre de telles architectures nécessite des mécanismes particuliers, notamment pour gérer les accès aux circuits de mémoire utilisés.

Il existe essentiellement deux approches pour permettre à chaque microprocesseur d'accéder à un emplacement mémoire.

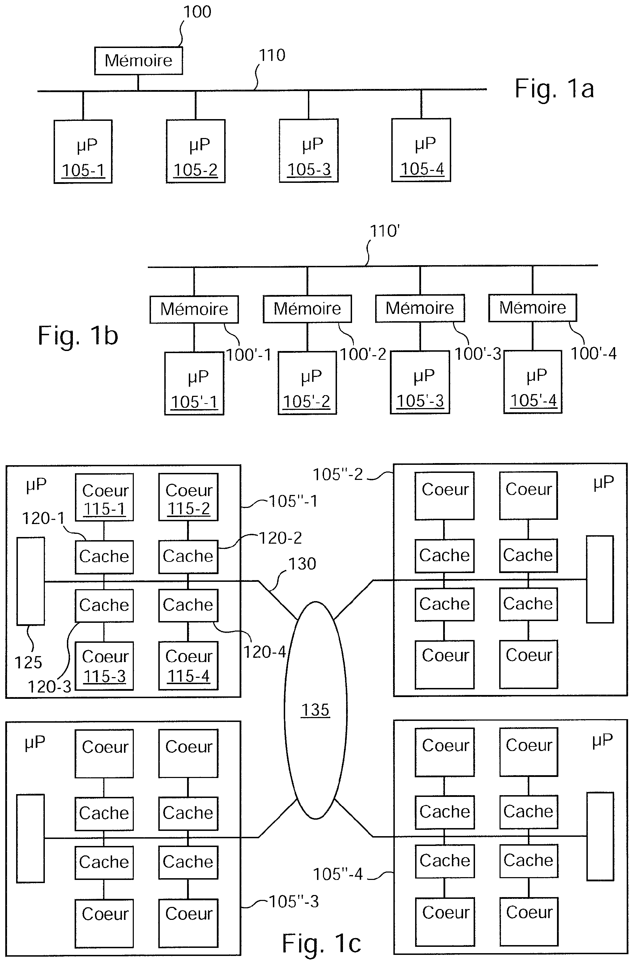

Selon une première solution, aussi appelée SMP (sigle de *Symmetric MultiProcessing* en terminologie anglo-saxonne) type UMA (acronyme d'*Uniform Memory Access* en terminologie anglo-saxonne), illustrée sur la figure 1a, un emplacement commun de mémoire est partagé entre tous les microprocesseurs. Ainsi, selon cet exemple, la mémoire 100 est accessible par chacun des microprocesseurs 105-1 à 105-4 via le bus système 110.

L'efficacité de cette solution, pouvant être considérée comme une évolution directe des architectures monoprocesseurs, est directement liée au nombre de microprocesseurs utilisés (la mémoire ne peut être accédé que par un microprocesseur à un instant donné). Par conséquent, cette solution n'est pas adaptée aux architectures massivement parallèles mettant en œuvre un nombre élevé de microprocesseurs.

Selon une seconde solution, aussi appelée architecture NUMA (acronyme de *Non Uniform Memory Access* en terminologie anglo-saxonne), illustrée sur la figure 1b, un emplacement local de mémoire est associé à chaque microprocesseur, chaque microprocesseur étant néanmoins capable d'accéder à un emplacement local de mémoire associé à un autre microprocesseur.

A titre d'illustration, les mémoires 100'-1 à 100'-4 sont ici associées aux microprocesseurs 105'-1 à 105'-4, respectivement. Ainsi, chaque microprocesseur 105'-i peut accéder à la mémoire qui lui est associée, appelée mémoire locale, ainsi qu'à la mémoire associée aux autres microprocesseurs, appelées mémoires distantes, via le bus système 110'.

Cependant, comme l'indique le nom de cette architecture, le temps d'accès à une mémoire distante est supérieur au temps d'accès à une mémoire locale.

La mémoire formée par l'ensemble des mémoires locales peut être considérée comme une mémoire globale représentée par une table de mémoire partagée entre les microprocesseurs. Cette table permet notamment de gérer les droits d'accès, en particulier les droits de lecture/écriture, afin, par exemple, d'interdire l'écriture simultanée d'une donnée à un emplacement donné par plusieurs microprocesseurs. Cette table de mémoire permet également d'établir un lien entre les adresses physiques et les références utilisées pour accéder au contenu de la mémoire (adresses logiques, adresses virtuelles, contenu, etc.).

La table de mémoire est généralement gérée par le système d'exploitation, aussi appelé OS (sigle d'*Operating System* en terminologie anglo-saxonne), qui peut notamment être exécuté par l'un des microprocesseurs.

La gestion de la mémoire est généralement réalisée par pages, c'est-à-dire par unités logiques de mémoire. Typiquement, une page représente une ligne de mémoire dans la structure matricielle formée par un ou plusieurs composants. La taille d'une page est, par exemple, de quatre mille octets.

La figure 1c illustre un second exemple de mise en oeuvre d'une architecture de type NUMA. Selon cet exemple, chaque microprocesseur 105"-1 à 105"-4 comprend quatre unités élémentaires de calcul, aussi appelées cœurs (ou CPU, sigle de *Central Processing Unit* en terminologie anglo-saxonne). Une mémoire cache est associée à chaque cœur. Une mémoire locale commune est associée à tous les cœurs d'un microprocesseur. Ainsi, le microprocesseur 105"-1 comprend les quatre cœurs 115-1 à 115-4 auxquels sont associées les mémoires caches 120-1 à 120-4, respectivement. Le microprocesseur 105"-1 comprend en outre la mémoire locale partagée 125. Il peut accéder aux mémoires locales des autres microprocesseurs via le bus 130 et le commutateur de réseau interne 135.

L'allocation de la mémoire dans une architecture de type NUMA est généralement statique. Elle peut être réalisée selon un mécanisme de répartition équitable, par exemple de façon cyclique, ou selon un mécanisme appelé « *first touch* » en terminologie anglo-saxonne selon lequel l'allocation est réalisée en fonction de l'application à l'origine de la demande d'allocation de mémoire, du microprocesseur sur lequel elle est exécutée et de la mémoire locale associée.

Cependant, pour optimiser l'efficacité de plusieurs applications exécutées sur une architecture de type NUMA et travaillant sur des données communes, un mécanisme de migration de données peut être mis en œuvre. Il permet de déplacer des données utilisées par plusieurs microprocesseurs d'une mémoire locale vers une autre. Il peut s'agir d'une migration volontaire précisant la mémoire locale de destination ou d'une migration basée sur des statistiques établies par le système mettant en œuvre ces applications.

Bien que pouvant permettre l'optimisation des accès mémoire pour certaines configurations d'applications, un tel mécanisme est néanmoins complexe à mettre en œuvre et ne permet pas nécessairement d'obtenir de bonnes performances pour l'exécution des applications. En outre, il n'est pas toujours disponible.

L'invention permet de résoudre au moins un des problèmes exposés précédemment.

L'invention a ainsi pour objet un procédé de gestion d'accès mémoire dans une architecture multiprocesseurs de type NUMA comprenant au moins deux unités de calcul et au moins deux mémoires distinctes, chacune desdites au moins deux mémoires étant associée, de façon locale, à l'une desdites au moins deux unités de calcul, chacune desdites au moins deux mémoires comprenant au moins une entité logique de mémoire, ce procédé comprenant les étapes suivantes lorsqu'au moins une commande d'accès visant au moins l'une desdites entités logiques de mémoire est reçue,
- détermination de l'état d'un indicateur de statut de ladite au moins une desdites entités logiques de mémoire, appelée au moins une première entité logique de mémoire, visée par ladite au moins une commande reçue ;
- si ledit indicateur de statut de ladite au moins une première entité logique de mémoire est dans un premier état, exécution de ladite au moins une commande reçue ; et,
- si ledit indicateur de statut de ladite au moins une première entité logique de mémoire est dans un second état,
   ∘ migration de données mémorisées dans ladite au moins une première entité logique dans au moins une entité logique de mémoire, appelée au moins une seconde entité logique de mémoire, d'une mémoire distincte de la mémoire comprenant ladite au moins une première entité logique de mémoire ; et,
   ∘ mise au premier état du statut de ladite au moins une seconde entité logique de mémoire.

Le procédé selon l'invention permet ainsi de gérer automatiquement et simplement l'emplacement de mémorisation de données afin d'optimiser l'exécution d'applications faisant appel à ces données, sans modification substantielle des applications ni de leur environnement d'exécution.

Selon un mode de réalisation particulier, ladite étape de mise au premier état du statut de ladite au moins une seconde entité logique de mémoire comprend en outre une étape de modification du lien entre une adresse physique desdites données migrées et une information logique permettant d'identifier lesdites données migrées pour identifier facilement l'emplacement des données migrées.

Toujours selon un mode de réalisation particulier, ladite au moins une information logique est une adresse logique, une adresse virtuelle ou une partie desdites données migrées.

Le procédé comprend en outre, de préférence, si ledit indicateur de statut de ladite au moins une première entité logique de mémoire est dans un second état, une étape d'exécution de ladite commande reçue exécutée après ladite étape de mise au premier état du statut de ladite au moins une seconde entité logique de mémoire pour accéder aux données migrées.

Selon un mode de réalisation particulier, une erreur d'accès mémoire est générée si ledit indicateur de statut de ladite au moins une première entité logique de mémoire est dans un second état, lesdites étapes de migration et de mise au premier état du statut de ladite au moins une seconde entité logique de mémoire étant exécutée en réponse à la détection de ladite erreur d'accès mémoire. Le procédé selon l'invention est ainsi particulièrement facile à mettre en œuvre avec un système d'exploitation tel que Linux.

Avantageusement, le procédé comprend en outre une étape de mise au second état du statut de ladite au moins une première entité logique de mémoire en réponse à une commande visant à cacher ladite au moins une première entité logique de mémoire afin de permettre une migration ultérieure de ladite au moins une première entité logique de mémoire si un accès à celle-ci est effectué. Ladite étape de mise au second état du statut de ladite au moins une première entité logique de mémoire est, de préférence, exécutée à la fin de l'exécution d'une étape d'une application exécutée par l'unité de calcul associée à la mémoire comprenant ladite au moins une première entité logique de mémoire pour permettre la migration de ladite au moins une première entité logique de mémoire dans une mémoire locale d'une unité de calcul accédant à cette entité logique de mémoire. Ainsi, les données utilisées par des applications sont, si possible, mémorisées dans des mémoires locales des unités de calcul exécutant ces applications.

Toujours selon un mode de réalisation particulier, lesdites entités logiques de mémoire sont des pages et lesdites unités de calcul sont des microprocesseurs.

Le procédé selon l'invention est avantageusement mis en œuvre par le système d'exploitation utilisé par lesdites au moins deux unités de calcul.

L'invention a également pour objet un programme d'ordinateur comprenant des instructions adaptées à la mise en œuvre de chacune des étapes du procédé décrit précédemment lorsque ledit programme est exécuté par un ordinateur ainsi qu'un dispositif comprenant des moyens adaptés à la mise en œuvre de chacune des étapes du procédé décrit précédemment.

Les avantages procurés par ce programme d'ordinateur et ce dispositif sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1, comprenant les figures 1a, 1b et 1c, représente schématiquement des exemples de structures multiprocesseurs ;

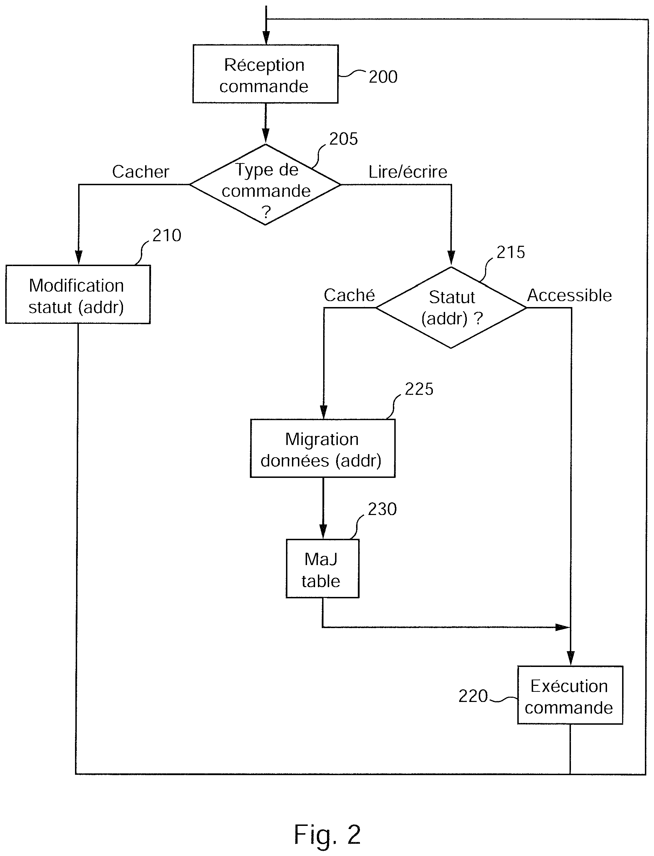

- la figure 2 illustre schématiquement certaines étapes d'un exemple d'algorithme du gestionnaire d'accès à la mémoire, pouvant être mis en œuvre par le système d'exploitation, lorsqu'une commande d'accès à des données ou visant à cacher une entité logique de mémoire est reçue, permettant la migration de données conformément à l'invention ; et,

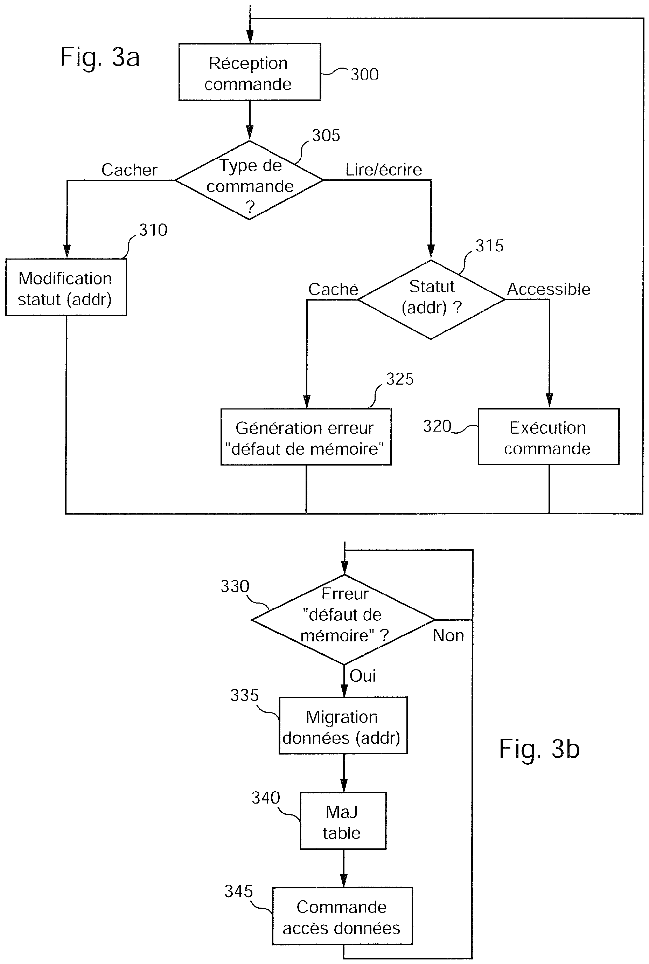

- la figure 3, comprenant les figures 3a et 3b, illustre schématiquement certaines étapes du gestionnaire de mémoire du système d'exploitation lorsqu'une commande d'accès à des données ou visant à cacher une entité logique de mémoire est reçue et que les droits associés aux applications exécutées ne permettent pas d'effectuer directement la migration.

De façon générale, l'invention a pour objet la migration de données contenues dans des entités logiques de mémoire, telles que des pages, d'une mémoire locale associée à une première unité de calcul, par exemple un microprocesseur, vers une autre mémoire locale associée à une seconde unité de calcul. Cette migration a lieu lorsqu'une application exécutée sur la première unité de calcul n'a plus besoin d'accéder aux données mémorisées dans ces entités logiques de mémoire alors que la seconde unité de calcul a besoin d'y accéder.

Plus précisément, lorsqu'une étape (aussi appelée *thread* en terminologie anglo-saxonne) d'une application (aussi appelée *process* en terminologie anglo-saxonne), exécutée par une première unité de calcul et utilisant des données mémorisées dans des entités logiques de mémoire d'une mémoire locale à cette première unité de calcul se termine, elle cache (ou libère) ces entités logiques de mémoire. Les données contenues dans celles-ci peuvent alors migrer dans des entités logiques de mémoire d'une autre mémoire locale associée à une autre unité de calcul pour permettre à une étape d'une application exécutée par cette dernière d'accéder, de façon locale, aux données mémorisées dans ces entités logiques de mémoire.

Après migration, les données mémorisées ne sont plus disponibles dans la mémoire locale associée à la première unité de calcul.

A ces fins, une indication supplémentaire est associée à chaque entité logique de mémoire, c'est-à-dire, par exemple, à chaque page, pour définir un statut. Le statut peut prendre ici au moins l'un des deux états suivants, pouvant être codés sur un bit : « accessible » et « caché ». En d'autres termes, cette indication représente l'autorisation ou non de migrer les données de l'entité logique de mémoire correspondante. Ainsi, dans le contexte de l'invention, une entité logique de mémoire telle qu'une page est dite cachée si son état requiert une migration préalable avant toute action de lecture et/ou d'écriture.

A titre d'illustration, lorsque le système d'exploitation Linux (Linux est une marque) est utilisé, cette indication peut être mémorisée sous forme d'un *flag PROT_MIGR* dans la variable *prot* de la fonction de protection des accès mémoires *mprotect()* définie de la façon suivante,
int mprotect(const void *addr, size_t len, int prot) ;
Ce *flag* peut être ajouté à la variable *prot* de la façon suivante,
PROT_READ | PROT_WRITE | PROT_MIGR

Il marque ainsi les pages cachées ou non accessibles dont le contenu est susceptible de migrer.

Cette indication est, de préférence, mémorisée dans la table de mémoire. Lorsque le statut d'une entité logique de mémoire est « caché », les données contenues dans cette entité logique de mémoire ne sont plus directement accessibles et peuvent être migrées. Elles sont donc migrées, si nécessaire, c'est-à-dire si elles ne sont pas contenues dans une mémoire locale du microprocesseur exécutant l'application y faisant appel, avant d'être accessibles à nouveau.

La table 1, donnée en annexe, illustre un exemple de table de mémoire. Comme illustré, cette table comprend une première colonne représentant une adresse logique, une adresse virtuelle, un contenu ou toute autre indication permettant de localiser un emplacement mémoire correspondant à une entité logique de mémoire.

Elle comprend également une seconde colonne représentant les adresses physiques associées à ces adresses logiques, virtuelles, ces contenus ou ces autres indications permettant de localiser un emplacement mémoire correspondant à une entité logique de mémoire.

Enfin, cette table comprend en outre une troisième colonne dans laquelle sont mémorisés les statuts associés à chaque entité logique de mémoire.

L'exemple de table de mémoire illustrée ici correspond à une architecture de type NUMA dans laquelle quatre mémoires locales distinctes sont utilisées (comme indiqué dans la quatrième colonne). Chacune de ces mémoires est, par exemple, associée à un microprocesseur particulier.

Ainsi, à titre d'illustration, les données correspondantes à l'adresse virtuelle i sont accessibles à l'adresse physique j dans la première mémoire locale. Le statut correspondant à l'entité logique de mémoire comprenant ces données est « caché ». Ainsi, les données correspondantes à l'adresse virtuelle i peuvent être migrées.

De même, les données correspondantes à l'adresse virtuelle k sont accessibles à l'adresse physique / dans la première mémoire locale. Le statut correspondant à l'entité logique de mémoire comprenant ces données est « accessible ». Ainsi, les données correspondantes à l'adresse virtuelle k ne peuvent pas être migrées.

Par ailleurs, une commande telle qu'un appel de système est, de préférence, ajoutée à la fin de chaque étape (*thread*) d'application (process) pour modifier, le cas échéant, le statut des entités logiques de mémoire comprenant les données traitées par cette étape d'application et appartenant à la mémoire locale associée à l'unité de calcul sur laquelle est exécutée l'étape. Cette commande ou cet appel de système a pour objet de cacher une ou plusieurs entités logiques de mémoire pour mettre la migration des données contenues dans celles-ci. Le fait de cacher une entité logique de mémoire consiste ici à mettre son statut à l'état « caché ».

La figure 2 illustre schématiquement certaines étapes d'un exemple de l'algorithme général du gestionnaire d'accès à la mémoire, pouvant être mis en œuvre par le système d'exploitation, lorsqu'une commande d'accès à des données, par exemple une commande de lecture ou d'écriture, ou une commande visant à cacher une entité logique de mémoire est reçue, permettant la migration de données conformément à l'invention.

Après avoir reçue une commande telle qu'un appel de système (étape 200), un test est effectué pour déterminer le type de la commande reçue, c'est-à-dire ici pour déterminer s'il s'agit d'une commande visant à cacher une ou plusieurs entités logiques de mémoire permettant la migration des données qu'elles contiennent ou s'il s'agit d'une commande d'accès à des données, par exemple une commande de lecture ou d'écriture de données (étape 205).

Si la commande reçue est une commande visant à cacher une ou plusieurs entités logiques de mémoire, le statut correspondant est modifié (étape 210). Ainsi, par exemple, si une commande visant à cacher une ou plusieurs entités logiques de mémoire est reçue avec *addr* comme paramètre (*addr* représentant une adresse logique, une adresse virtuelle, un contenu ou toute autre indication permettant de localiser une ou plusieurs entités logiques de mémoire), le statut associé à cette adresse logique, adresse virtuelle, contenu ou toute autre indication permettant de localiser un emplacement mémoire est mis à l'état « caché ».

Il convient de remarquer ici que, par construction, une commande visant à cacher des entités logiques de mémoire est transmise par une étape d'application à la fin de son exécution. Ainsi, l'état de cette entité logique de mémoire est dans l'état « accessible » lorsque la commande est émise. Néanmoins, un test (non représenté) peut être effectué pour vérifier le statut de cette entité logique de mémoire avant de le changer.

Si la commande reçue est une commande d'accès à des données, un autre test est effectué pour déterminer le statut de l'entité logique de mémoire devant être accédée (étape 215). Ce statut peut être obtenu à partir de la table de mémoire selon le paramètre *addr* reçu avec la commande d'accès à des données (le paramètre *addr* représentant une adresse logique, une adresse virtuelle, un contenu ou toute autre indication permettant de localiser un emplacement mémoire).

Si le statut de l'entité logique de mémoire devant être accédée est « accessible », la commande d'accès à des données est exécutée de façon standard (étape 220). La zone de mémoire accédée peut être locale ou distante par rapport à l'unité de calcul exécutant l'étape ayant générée la commande traitée ici.

Si le statut de l'entité logique de mémoire devant être accédée est « caché », une fonction de migration de données est appelée (étape 225). Cette fonction a notamment pour objet de déterminer l'emplacement physique de l'entité logique de mémoire devant être accédée, de déterminer la mémoire locale associée à l'unité de calcul ayant transmis la commande d'accès à des données et, le cas échéant, d'allouer, dans cette mémoire, une zone mémoire comprenant une ou plusieurs entités logiques de mémoire. Elle a également pour objet, le cas échéant, de copier les données contenues dans l'entité logique de mémoire devant être accédée, et éventuellement dans les entités logiques de mémoire voisines, dans une ou plusieurs entités logiques de mémoire de la zone mémoire allouée.

Cette étape de migration des données est suivie par une étape de mise à jour de la table de mémoire (étape 230). Cette étape consiste notamment à changer le statut des entités logiques de mémoire de la zone de mémoire allouée dans la mémoire locale associée à l'unité de calcul ayant transmis la commande d'accès à des données, dans laquelle ont été migrées les données contenues dans l'entité logique de mémoire accédée (et, éventuellement, dans les entités logiques de mémoire voisines), pour le mettre dans l'état « accessible ». Elle consiste également, le cas échéant, à modifier le lien entre l'adresse physique où ont été migrées les données et l'adresse logique, l'adresse virtuelle, le contenu ou l'indication utilisé pour localiser la ou les entités logiques de mémoire associée à ces données.

Il est observé ici que si la mémoire dans laquelle se trouve l'entité logique de mémoire devant être accédée correspond à la mémoire locale associée à l'unité de calcul ayant transmis la commande d'accès à des données, les données ne sont pas migrées, seul leur statut est mis à jour.

Après avoir mis à jour la table de mémoire, la commande d'accès à des données est exécutée de façon standard (étape 345). Elle permet d'accéder à l'entité logique de mémoire dans la mémoire locale associée à l'unité de calcul ayant transmis la commande d'accès.

Suite à la modification du statut d'une entité logique de mémoire (étape 210) ou à l'exécution d'une commande d'accès à des données (étape 220), les étapes précédentes (étapes 200 à 230) sont répétées pour traiter les commandes reçues suivantes.

La figure 3, comprenant les figures 3a et 3b, illustre schématiquement certaines étapes du gestionnaire de mémoire du système d'exploitation lorsqu'une commande d'accès à des données, par exemple une commande de lecture/écriture de données, ou une commande visant à cacher une entité logique de mémoire est reçue et que les droits associés aux étapes et/ou aux applications exécutées ne permettent pas d'effectuer directement la migration.

Après avoir reçu une commande telle qu'un appel de système (étape 300), un test est effectué pour déterminer le type de la commande reçue, c'est-à-dire ici pour déterminer s'il s'agit d'une commande visant à cacher une ou plusieurs entités logiques de mémoire permettant la migration des données qu'elles contiennent ou s'il s'agit d'une commande d'accès à des données, par exemple une commande de lecture ou d'écriture de données (étape 305).

Si la commande reçue est une commande visant à cacher une ou plusieurs entités logiques de mémoire, le statut correspondant à celles-ci est modifié (étape 310). Ainsi, par exemple, si la commande visant à cacher une ou plusieurs entités logiques de mémoire est reçue avec *addr* comme paramètre (*addr* représentant une adresse logique, une adresse virtuelle, un contenu ou toute autre indication permettant de localiser une ou plusieurs entités logiques de mémoire), le statut associé à cette adresse logique, adresse virtuelle, contenu ou toute autre indication permettant de localiser un emplacement mémoire est mis à l'état « caché ».

Comme indiqué précédemment en référence à la figure 2, l'état d'une entité logique de mémoire devant être cachée est a priori dans l'état « accessible » lorsque la commande est émise. Néanmoins, un test (non représenté) peut être effectué pour vérifier le statut de cette entité logique de mémoire avant de le changer.

Si la commande reçue est une commande d'accès à des données, par exemple une commande de lecture ou d'écriture de données, un autre test est effectué pour déterminer le statut de l'entité logique de mémoire devant être accédée (étape 315). Ce statut peut être obtenu à partir de la table de mémoire selon le paramètre *addr* reçu avec la commande de lecture/écriture (le paramètre *addr* représentant une adresse logique, une adresse virtuelle, un contenu ou toute autre indication permettant de localiser un emplacement mémoire).

Si le statut de l'entité logique de mémoire devant être accédée est « accessible », la commande d'accès à des données est exécutée de façon standard (étape 320). La zone de mémoire comprenant l'entité logique de mémoire accédée peut être locale ou distante par rapport à l'unité de calcul exécutant l'étape (*thread*) ayant généré la commande traitée ici.

Si le statut de l'entité logique de mémoire devant être accédée est « caché », une erreur de type « défaut de mémoire » est générée (étape 325).

Suite à la modification du statut d'une ou de plusieurs entités logiques de mémoire (étape 310), à l'exécution d'une commande d'accès à des données (étape 320) ou à la génération d'une erreur de type « défaut de mémoire » (étape 325), les étapes précédentes (étapes 300 à 325) sont répétées pour traiter les commandes reçues suivantes.

Parallèlement au mécanisme de gestion de la mémoire, le système d'exploitation comprend des mécanismes de gestion d'erreur. En particulier, le système d'exploitation comprend un mécanisme de gestion d'erreur de type « défaut de mémoire » tel qu'illustré sur la figure 3b.

Lorsqu'une erreur de type « défaut de mémoire » est détectée (étape 330, une fonction de migration de données est appelée (étape 335). Cette fonction a pour objet de déterminer l'emplacement physique de l'entité logique de mémoire dont l'accès a généré l'erreur de type « défaut de mémoire », de déterminer la mémoire locale associée à l'unité de calcul ayant transmis la commande à l'origine de l'erreur et, le cas échéant, d'allouer, dans cette mémoire, une ou plusieurs entités logiques de mémoire. Elle a également pour objet de copier, le cas échéant, les données contenues dans l'entité logique de mémoire dont l'accès a généré l'erreur de type « défaut de mémoire » et, éventuellement, dans les entités logiques de mémoire voisines, dans la ou les entités logiques de mémoire allouées.

Cette étape de migration des données est suivie par une étape de mise à jour de la table de mémoire (étape 340). Cette étape consiste notamment à changer le statut des entités logiques de mémoire de la zone de mémoire allouée dans la mémoire locale associée à l'unité de calcul ayant transmis la commande à l'origine de l'erreur, dans lesquelles ont été migrées les données contenues dans l'entité logique de mémoire ayant généré l'erreur de type « défaut de mémoire » et, éventuellement, dans les entités logiques de mémoire voisines, pour le mettre dans l'état « accessible ». Elle consiste également, le cas échéant, à modifier le lien entre l'adresse physique où ont été migrées les données et l'adresse logique, l'adresse virtuelle, le contenu ou l'indication utilisé pour localiser la ou les entités logiques de mémoire associées à ces données.

Après avoir mis à jour la table de mémoire, le mécanisme de gestion d'erreur retransmet la commande d'accès à des données à l'origine de l'erreur de type « défaut de mémoire » (étape 345). Il est observé que suite à la migration des données et à la mise à jour de la table de mémoire, cette commande est exécutée de façon standard et permet d'accéder à l'entité logique de mémoire dans la mémoire locale associée à l'unité de calcul ayant transmis la commande d'accès à l'origine de l'erreur de type « défaut de mémoire ».

A nouveau, il est observé ici que si la mémoire dans laquelle se trouve l'entité logique de mémoire dont l'accès a généré l'erreur de type « défaut de mémoire » correspond à la mémoire locale associée à l'unité de calcul ayant transmis la commande à l'origine de l'erreur, les données ne sont pas migrées, seul leur statut est mis à jour.

Les étapes 330 à 345 sont répétées pour toutes les erreurs de type « défaut de mémoire » détectées.

Il convient de remarquer que les étapes (*threads*) d'une application (*process*) partagent le même espace mémoire et peuvent ainsi accéder aux mêmes entités logiques de mémoire. De même, les entités logiques de mémoire peuvent être partagées entre plusieurs étapes d'applications différentes. Par conséquent, certaines précautions doivent être prises lorsque plusieurs étapes et/ou applications peuvent déclancher la migration de données contenues dans les mêmes entités logiques de mémoire. Ces précautions sont, de préférence, gérées au niveau des applications.

Lorsque la fonction de copie lors de l'écriture (appelée *copy-on-write* en terminologie anglo-saxonne) est utilisée, le mécanisme de migration ne s'applique que sur la dernière copie. Ceci est généralement réalisé automatiquement en raison des règles de protection souvent mises en œuvre par les systèmes d'exploitation.

Par ailleurs, il est observé ici que les données contenues dans des entités logiques de mémoire, par exemple des pages, peuvent être migrées par entité logique de mémoire ou par groupe d'entités logiques de mémoire. Dans ce cas, si les données d'une entité logique de mémoire doit être migrée, les données des entités logiques de mémoire voisines sont également migrées si elles n'appartiennent pas à la mémoire locale associée à l'unité de calcul de laquelle est issue la commande d'accès, si elles peuvent être migrées, c'est-à-dire si leur statut est « caché » et si leur adresse virtuelle est la même que celle de l'entité logique de mémoire accédée selon un masque d'adresse prédéfini.

A titre d'illustration, l'administrateur d'un système mettant en œuvre le système d'exploitation Linux peut utiliser la commande suivante pour permettre la migration de plusieurs pages,
sysctl -w vm.migrate_page_mask_sh=<n>
Le noyau calcul alors un masque d'adresse de la façon suivante,
∼((1UL << (n + PAGE_SHIFT)) - 1)

Il est ainsi possible de migrer simultanément plusieurs pages, selon la limite de nombre de pages imposée par le système d'exploitation.

Naturellement, pour satisfaire des besoins spécifiques, une personne compétente dans le domaine de l'invention pourra appliquer des modifications dans la description précédente.

### ANNEXE

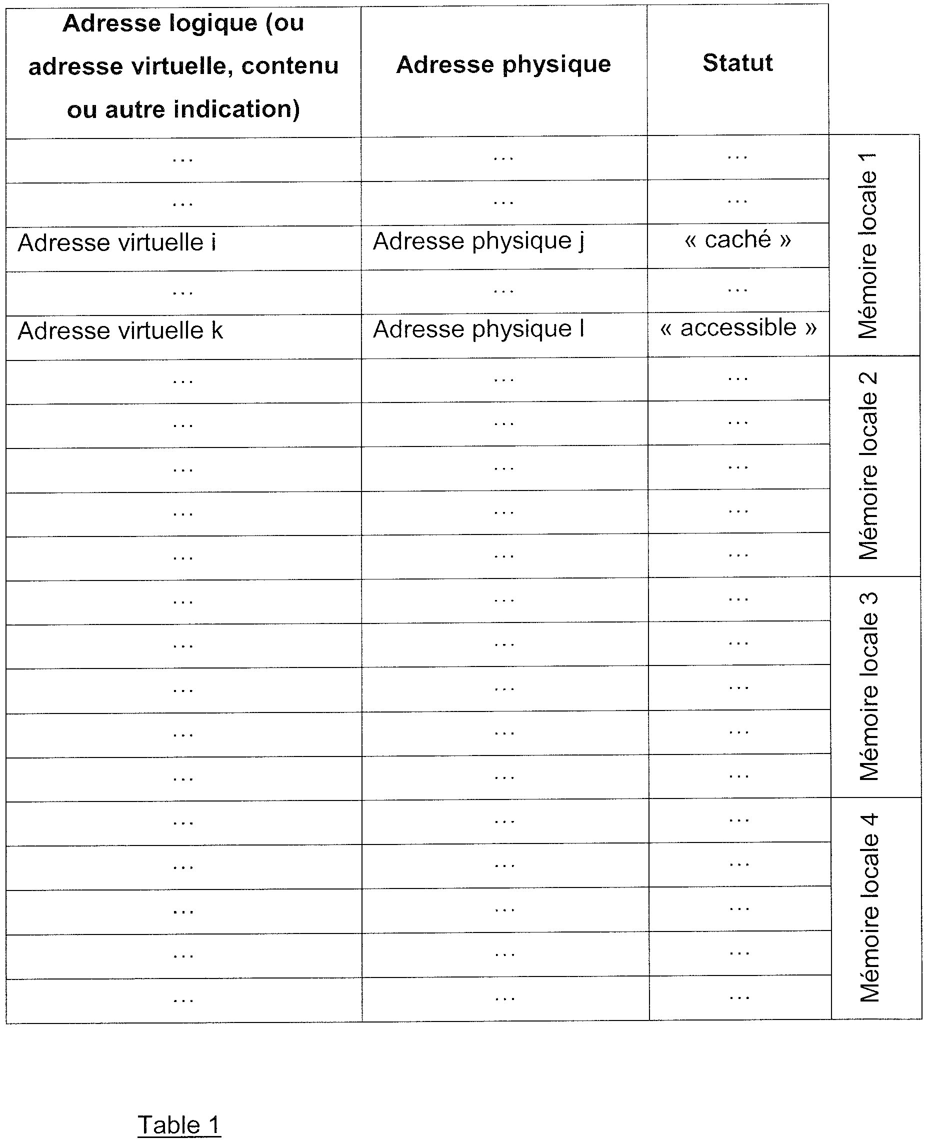

## Revendications

1. Procédé de gestion d'accès mémoire dans une architecture multiprocesseurs de type NUMA comprenant au moins deux unités de calcul (105', 105") et au moins deux mémoires distinctes (100', 125), chacune desdites au moins deux mémoires étant associée, de façon locale, à l'une desdites au moins deux unités de calcul, chacune desdites au moins deux mémoires comprenant au moins une entité logique de mémoire, ce procédé étant **caractérisé en ce qu'**il comprend les étapes suivantes lorsqu'au moins une commande d'accès visant au moins l'une desdites entités logiques de mémoire est reçue,
- détermination (215, 315) de l'état d'un indicateur de statut de ladite au moins une desdites entités logiques de mémoire, appelée au moins une première entité logique de mémoire, visée par ladite au moins une commande reçue ;
- si ledit indicateur de statut de ladite au moins une première entité logique de mémoire est dans un premier état, exécution (220, 320) de ladite au moins une commande reçue ; et,
- si ledit indicateur de statut de ladite au moins une première entité logique de mémoire est dans un second état,
∘ migration (225, 335) de données mémorisées dans ladite au moins une première entité logique dans au moins une entité logique de mémoire, appelée au moins une seconde entité logique de mémoire, d'une mémoire distincte de la mémoire comprenant ladite au moins une première entité logique de mémoire ; et,
∘ mise au premier état (230, 340) du statut de ladite au moins une seconde entité logique de mémoire
le procédé comprenant en outre une étape de mise au second état (210, 310) du statut de ladite au moins une première entité logique de mémoire en réponse à une commande visant à cacher ladite au moins une première entité logique de mémoire, ladite étape de mise au second état du statut de ladite au moins une première entité logique de mémoire étant exécutée à la fin de l'exécution d'une étape d'une application exécutée par l'unité de calcul associée à la mémoire comprenant ladite au moins une première entité logique de mémoire.

2. Procédé selon la revendication 1 selon lequel ladite étape de mise au premier état du statut de ladite au moins une seconde entité logique de mémoire comprend en outre une étape de modification du lien entre une adresse physique desdites données migrées et une information logique permettant d'identifier lesdites données migrées.

3. Procédé selon la revendication précédente selon lequel ladite au moins une information logique est une adresse logique, une adresse virtuelle ou une partie desdites données migrées.

4. Procédé selon l'une quelconque des revendications précédentes comprenant en outre, si ledit indicateur de statut de ladite au moins une première entité logique de mémoire est dans un second état, une étape d'exécution (220) de ladite commande reçue exécutée après ladite étape de mise au premier état du statut de ladite au moins une seconde entité logique de mémoire.

5. Procédé selon l'une quelconque des revendications 1 à 3 selon lequel une erreur d'accès mémoire est générée (325) si ledit indicateur de statut de ladite au moins une première entité logique de mémoire est dans un second état, lesdites étapes de migration et de mise au premier état du statut de ladite au moins une seconde entité logique de mémoire étant exécutée en réponse à la détection (330) de ladite erreur d'accès mémoire.

6. Procédé selon l'une quelconque des revendications précédentes selon lequel lesdites entités logiques de mémoire sont des pages et selon lequel lesdites unités de calcul sont des microprocesseurs.

7. Procédé selon l'une quelconque des revendications précédentes, le procédé étant mis en œuvre par le système d'exploitation utilisé par lesdites au moins deux unités de calcul.

8. Programme d'ordinateur comprenant des instructions adaptées à la mise en œuvre de chacune des étapes du procédé selon l'une quelconque des revendications précédentes lorsque ledit programme est exécuté par un ordinateur.

9. Dispositif comprenant des moyens adaptés à la mise en œuvre de chacune des étapes du procédé selon l'une quelconque des revendications 1 à 6.

## Patentansprüche

1. Verfahren zur Verwaltung von Speicherzugriffen in einer Multiprozessorarchitektur vom Typ NUMA, die zumindest zwei Recheneinheiten (105', 105") und zumindest zwei separate Speicher (100', 125) umfasst, wobei jeder der zumindest zwei Speicher lokal einer der zumindest zwei Recheneinheiten zugeordnet ist, wobei jeder der zumindest zwei Speicher zumindest eine logische Speichereinheit umfasst, wobei das Verfahren **dadurch gekennzeichnet ist, dass** es bei Empfang zumindest eines Zugriffsbefehls, der auf zumindest eine der logischen Speichereinheiten abzielt, die folgenden Schritte umfasst:
- Bestimmen (215, 315) des Zustands eines Statusindikators der zumindest einen der logischen Speichereinheiten, die als zumindest eine erste logische Speichereinheit bezeichnet wird und auf die der zumindest eine empfangene Befehl abzielt;
- wenn sich der Statusindikator der zumindest einen ersten logischen Speichereinheit in einem ersten Zustand befindet, Ausführen (220, 320) des zumindest einen empfangenen Befehls; und
- wenn sich der Statusindikator der zumindest einen ersten logischen Speichereinheit in einem zweiten Zustand befindet
∘ Migration (225, 335) von in der zumindest einen ersten logischen Einheit gespeicherten Daten in zumindest eine logische Speichereinheit, als zumindest eine zweite logische Speichereinheit bezeichnet, eines Speichers, der separat von dem Speicher vorliegt, der die zumindest eine erste logische Speichereinheit umfasst; und
∘ Versetzen (230, 340) des Status der zumindest einen zweiten logischen Speichereinheit in den ersten Zustand,
wobei das Verfahren ferner einen Schritt des Versetzens (210, 310) des Status der zumindest einen ersten logischen Speichereinheit in den zweiten Zustand als Reaktion auf einen Befehl zum Ausblenden der zumindest einen ersten logischen Speichereinheit umfasst, wobei der Schritt des Versetzens des Status der zumindest einen ersten logischen Speichereinheit in den zweiten Zustand am Ende der Ausführung eines Schritts einer Anwendung ausgeführt wird, die von der Recheneinheit ausgeführt wird, die dem Speicher zugeordnet ist, der die zumindest eine erste logische Speichereinheit umfasst.

2. Verfahren nach Anspruch 1, wobei der Schritt des Versetzens des Status der zumindest einen zweiten logischen Speichereinheit in den ersten Zustand ferner einen Schritt des Änderns der Verknüpfung zwischen einer physischen Adresse der migrierten Daten und einer logischen Information zur Identifizierung der migrierten Daten umfasst.

3. Verfahren nach dem vorangehenden Anspruch, wobei die zumindest eine logische Information eine logische Adresse, eine virtuelle Adresse oder ein Teil der migrierten Daten ist.

4. Verfahren nach einem der vorangehenden Ansprüche, wobei es dann, wenn sich der Statusindikator der zumindest einen ersten logischen Speichereinheit in einem zweiten Zustand befindet, einen Schritt des Ausführens (220) des empfangenen Befehls umfasst, der nach dem Schritt des Versetzens des Status der zumindest einen zweiten logischen Speichereinheit in den ersten Zustand ausgeführt wird.

5. Verfahren nach einem der Ansprüche 1 bis 3, wobei ein Speicherzugriffsfehler erzeugt wird (325), wenn sich der Statusindikator der zumindest einen ersten logischen Speichereinheit in einem zweiten Zustand befindet, wobei die Schritte des Migrierens und des Versetzens des Status der zumindest einen zweiten logischen Speichereinheit in den ersten Zustand als Reaktion auf die Erkennung (330) des Speicherzugriffsfehlers ausgeführt werden.

6. Verfahren nach einem der vorangehenden Ansprüche, wobei die logischen Speichereinheiten Seiten sind und die Recheneinheiten Mikroprozessoren sind.

7. Verfahren nach einem der vorangehenden Ansprüche, wobei das Verfahren von dem Betriebssystem durchgeführt wird, das von den zumindest zwei Recheneinheiten verwendet wird.

8. Computerprogramm, das Anweisungen umfasst, die zum Ausführen eines jeden der Schritte des Verfahrens nach einem der vorangehenden Ansprüche ausgelegt sind, wenn das Programm auf einem Computer ausgeführt wird.

9. Vorrichtung mit Mitteln, die zum Ausführen eines jeden der Schritte des Verfahrens nach einem der Ansprüche 1 bis 6 ausgelegt sind.

## Claims

1. A method of managing memory access in a multiprocessor architecture of NUMA type comprising at least two computing units (105', 105") and at least two distinct memories (100', 125), each of said at least two memories being associated, locally, with one of said at least two computing units, each of said at least two memories comprising at least one logical memory entity, the method being **characterized in that** it comprises the following steps when at least one access command concerning at least one of said logical memory entities is received,
- determining (215, 315) the state of a status flag of said at least one of said logical memory entities, referred to at the least one first logical memory entity, concerned by said at least one received command;
- if said status flag of said at least one first logical memory entity is in a first state, executing (220, 320) said at least one received command; and,
- if said status flag of said at least one first logical memory entity is in a second state,
∘ migrating (225, 335) data stored in said at least one first logical entity into at least one logical memory entity, referred to at the least one second logical memory entity, of a memory that is distinct from the memory comprising said at least one first logical memory entity; and,
∘ setting (230, 340) the status of said at least one second logical memory entity to the first state
the method further comprising a step of setting (210, 310) the status of said at least one first logical memory entity to the second state in response to a command directed to hiding said at least one first logical memory entity, said step of setting the status of said at least one first logical memory entity to the second state being executed at the end of the execution of a step of an application executed by the computing unit associated with the memory comprising said at least one first logical memory entity.

2. A method according to claim 1, wherein said step of setting the status of said at least one second logical memory entity to the first state further comprises a step of modifying the link between a physical address of said migrated data and an item of logical information enabling identification of said migrated data.

3. A method according to the preceding claim wherein said at least one item of logical information is a logical address, a virtual address, or part of said migrated data.

4. A method according to any one of the preceding claims further comprising, if said status flag of said at least one first logical memory entity is in a second state, a step of executing (220) said received command executed after said step of setting said at least one second logical memory entity to the first state.

5. A method according to any one of claims 1 to 3 wherein a memory access error is generated (325) if said status flag of said at least one first logical memory entity is in a second state, said steps of migrating and setting the status of said at least one second logical memory entity to the first state being executed in response to the detection (330) of said memory access error.

6. A method according to any one of the preceding claims wherein said logical memory entities are pages and wherein said computing units are microprocessors.

7. A method according to any one of the preceding claims, the method being implemented by the operating system used by said at least two computing units.

8. A computer program comprising instructions adapted for carrying out each of the steps of the method according to any one of the preceding claims when said program is executed by a computer.

9. A device comprising means adapted for the implementation of each of the steps of the method according to any one of claims 1 to 6.
